# EUROPEAN PATENT SPECIFICATION

(11) **EP 0 570 876 B1**
(45) Date of publication and mention of the grant of the patent: **25.03.1998**
(21) Application number: 93107958.6
(22) Date of filing: 15.05.1993
(51) Int. Cl.: G01S 13/78, G01S 7/40

(54) **Arrangement for comparing two separated bursts of signal at two different frequencies**
Vorrichtung zum Vergleichen von zwei zeitgetrennten Impulsfolgen mit verschiedenen Frequenzen
Dispositif pour comparer deux séquences d'impulsions séparées temporellement ayant des fréquences différentes

(30) Priority: 21.05.1992 IT MI921230
(43) Date of publication of application: 24.11.1993
(73) Proprietor: Alcatel Air Navigation Systems S.r.l., I-20158 Milano (IT)
(72) Inventor: Biella, Daniele, I-Monza (MI) (IT)
(74) Representative: Pohl, Herbert, Dipl.-Ing.

(56) References cited:
- GB-A- 2 052 911
- ELECTRICAL COMMUNICATION. vol. 58, no. 3, 1984, BRUSSELS BE pages 336 - 343 K. BECKER ET AL. 'Precision Distance Measuring Equipment for the Microwave Landing System'
- NEC RESEARCH AND DEVELOPMENT no. 90, July 1988, TOKYO JP pp 106 - 116, XP46941, KOBAYASHI et al.: 'Precision Distance Measuring Equipment (DMP/P) Transponder'
- XP46941 KOBAYASHI ET AL. 'Precision Distance Measuring Equipment (DME/P) Transponder'

## Description

The present invention relates to an arrangement according to the preamble of claim 1. Such an arrangement may be part of a DME (Distance Measuring Equipment) System in an JLS or MLS navaid plant. DME Systems provide the aircraft with a distance information by measuring total round-trip time between an interrogation from an airborne transmitter and a reply from a ground transponder.

From a strictly theoretical point of view, and therefore by not taking into account air traffic and morphology of the particular ground where the DME system really operates, it is sufficient that the transmitter only sends a so-called interrogation pulse and the transponder, once received the interrogation pulse, transmits in turn only a so-called reply pulse.

Since the transponder takes a certain time to reply anyhow, it has been established by standardization authorities in the sector of air navigation that the reply pulse is transmitted by the transponder with a fixed and pre-established delay with respect to the instant at which the interrogation pulse was received. The airborne equipments, therefore, take into account such a fixed and pre-established delay for the correct evaluation of distance.

Hence, during manufacturing and installation, there is the problem of being able to calibrate the transponder so that it precisely observes such pre-established delay.

Both the above-mentioned pulses are transmitted by modulating the amplitude of two carriers at two different frequencies about 1 GHz and at a distance of exactly 63 MHz from each other; the pulses have the same form and the same duration of about 3 microseconds; the fixed and pre-established delay is about 50 microseconds; the precision with which such delay must be observed by the transponder is few nanoseconds.

An obvious solution consists in providing at the input of an oscilloscope both pulses in such a way as to display them and then proceed with the measurement; but an oscilloscope having the characteristics necessary for allowing such measurement with the parameters set forth above is extremely expensive.

It is then a common practice to place before the oscilloscope a simple envelope detector; in such way the band necessary for the oscilloscope is few MHz. For the envelope detector, the known diode and capacitor configuration is used in such a way that distortion introduced by it is as much as possible limited.

However, such a solution introduces comparatively high errors, with respect to strict requirements, due to diode offset and above all to the fact that both measuring system and envelope detector operate at two different frequencies and therefore they introduce different delays for the two (interrogation and reply) pulses.

In GB-A-2052911 in Fig.4 and the description p.2, line 62 et seq., the receiving and evaluating section of a monitoring facility of a microwave landing system is disclosed in which pulses received from several transponders are fed to a mixer and multiplied there by the frequency used by the transmitter to activate the transponders.

Since all of the pulses outputted by the mixer have different frequencies, filtering means and other circuits located downstream of the mixer have to be provided seperately for each of the frequencies.

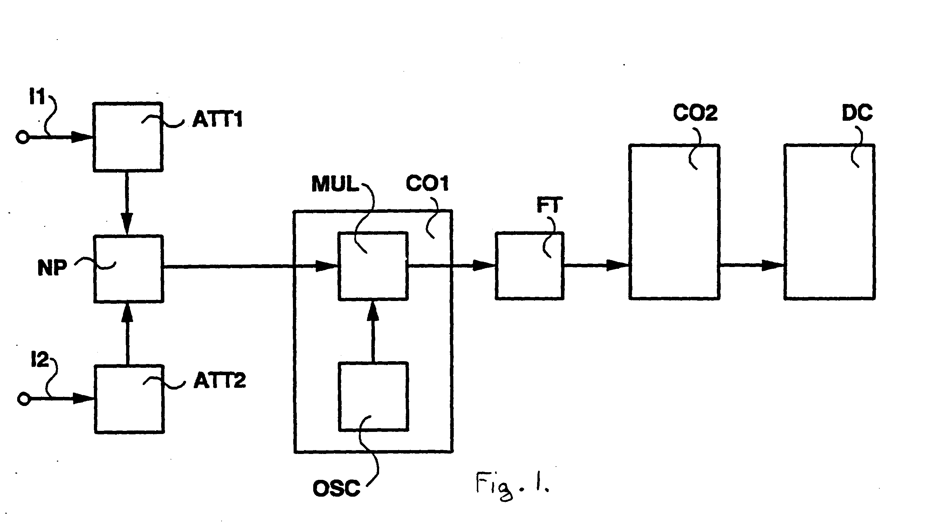

In NEC Research and Development, No. 90, July 1988, Tokyo JP, pp 106-116, xP46 941 a Precision Distance Measuring Equipment. Transponder is disclosed, which represents the closest prior art. In Fig.7 of that essay, it is readily apparent that the mixer at the output of a pre-amplifier for mixing the incoming signals with a CW signal is followed by two seperate channels working on different frequencies to prepare the two different pulses for comparison.

It is an object of the present invention to provide a measurement system which is not very expensive and such as to allow the test and calibration of DME systems, particularly of the ground transponder, according to the strict requirements imposed upon them.

This object is reached through the arrangement for comparing two temporally separated bursts of signal at two different frequencies, having the characteristics set forth in claim 1. Further advantageous aspects of the present invention are set forth in the subclaims.

Through the conversion of the two bursts of signal at two different frequencies in two new bursts at the same frequency through the same frequency converter, a strong reduction in the measurement error is obtained.

Such a solution is therefore suitable to be applied to the most general case, with respect to test and calibration of the DME systems, of comparing two temporally separated bursts of signal at two different frequencies; in fact it is independent of the characteristics of the two signal bursts and of the type of comparison to be carried out.

In case of use in DME systems such a solution may be applied also inside of Built-In Test Equipments (BITE) contained in such systems.

The invention will be now illustrated in more detail with reference to the attached drawing which shows a schematic block diagram of the arrangement in accord to the present invention.

In the following, "signal burst" means an electric signal limited in time, comprising both unmodulated signals and amplitude, frequency or phase modulated signals.

The arrangemenet is mainly composed of a comparing device DC and a first frequency converter CO1.

Two temporally separated bursts of signal at two different frequencies, a comparison of which is to be made, are provided at the input of the first frequency converter CO1 which converts them into two new bursts of signal at the same frequency, generally different from zero.

The output of the first converter CO1 is provided at the input of the comparing device DC which allows exactly the comparison between the two bursts.

As the two bursts are provided at the same input of the first converter CO1, both will be subjectd to practically identical amplitude distorsion and delays, also because the frequency conversion can be realized through circuits with regular response, at least much more regular than the one of an envelope detector; moreover the errors due to the comparing device DC will be extremely reduced because it operates now at the same frequency.

The output of the first converter CO1 can be advantageously provided to the output of a second converter CO2 which is designed to convert the two new bursts of signal at the same frequency into bursts at lower frequency, e.g. zero.

Naturally, in the second instance, the output of the second converter CO2 is provided at the input of the comparing device DC.

In order to improve the features of the arrangement and therefore the accuracy of the comparison it is convenient that the amplitudes of the two signal bursts are comparable or, still better, equal.

Such result is obtained by placing upstream the first converter CO1 a first attenuator ATT 1, a second attenuator ATT 2 and a pick-up node NP; the first attenuator ATT 1 is provided with an input I1 to which one of the two bursts of signal is applied, the second attenuator ATT 2 is provided with an input I2 to which the other of the two bursts of signal is applied, the pick-up node NP is provided with two inputs electrically connected with the outputs of the two attenuators ATT 1 and ATT 2, and with an output electrically connected to the input of the first frequency converter CO1; the attenuation factors of attenuators ATT 1 and ATT 2 must be chosen in a suitable way in relation to the power of the two bursts of signal respectively at the inputs I1 and I2.

The circuital choices for such devices basically depend on the frequency band at which one operates. In the case of DME systems, attenuators ATT 1 and ATT 2 can be realized through common RF attenuators while pick-up node NP consists in the electrical connection of its two inputs and by a non-directional coupler for the pick-up of the output; the transmitter of the aircraft and the ground transponder are respectively connected to the inputs of attenuators ATT 1 and ATT 2: the interrogation pulse is generated by the transmitter and reaches the transponder and the input of the first converter CO1; the transponder in turn generates afterwards the reply pulse that reaches the first converter; for a more accurate measurement it is necessary to take into account the reply pulse propagation time between the transponder and the pick-up node NP.

The same frequency first mentioned is, on principle, any.

A particularly advantageous choice for its implementation is a frequency equal to half the difference between such two different frequencies; this is obtainable by including an oscillator OSC and a multiplier MUL in the first converter CO1. Oscillator OSC generates a periodic electrical signal having a frequency equal to the average value of the two different frequencies; multiplier MUL receives at the input the two bursts of signal and multiplies them, in different times, by such periodic electric signal. Such periodic electrical signal can be advantageously a sinewave or a squarewave.

At the output of the first converter CO1, i.e at the output of the multiplier MUL, it is advisable to place a filter FT in such a way as to eliminate the spurious spectra deriving from the product. According to the circumstances it will be a low-pass or band-pass filter; the choice of the cutoff frequency is made with typical criteria used in telecommunications.

The second converter C02 can reduce the frequency of both bursts at any frequency: more exactly, it translates the spectrum of such bursts in such a way that its central frequency is less than the input one, the central frequency at the output is often chosen equal to zero;
in some circumstances a simple diode and capacitor envelope detector can be adequate to the purpose.

The use of a spectrum anayzer as a second converter CO2 in a practical realization is very advantageous. The analyzer must be set in the so-called SPAN ZERO mode, i.e. in that operation mode of the spectrum analyzer in which the channel filter is held fast and it does not sweep the spectrum and its output is picked up in order to send it to the comparing device DC; in such way the spectrum analyser operates like a precision envelope detector.
As a comparing device DC an oscilloscope, e.g. a storage one can be used ; in this case the comparison is carried out by the engineer through image observation. The band required from such an oscilloscope depends on the band of the two bursts and on the frequency reduction executed in particular by the second converter CO2; just thanks to such reduction the oscilloscope band will be particularly limited: in case of DME systems it is about 5 MHz. Should the amplitudes of the two bursts be not nearly equal, it is convenient to have at disposal an oscilloscope with contemporaneous double time base and with separately variable sensitivities in such a way as to be able to execute the graphic overlapping of the two bursts.

In the special case of DME systems the comparison to be executed consists in the measurement of time elapsed between said two bursts: although an oscilloscope, as said, could be used, an advantageous alternative is to use a time meter triggered, in a known manner, by the starts of the two bursts.

## Claims

1. Arrangement for comparing two temporally separated signal bursts which are being received at two different frequencies, in particular an interrogation pulse and a reply pulse in a DME system, with a first frequency converter (CO1) receiving said bursts at its input and converting each of them to a frequency different from its initial frequency, and with a comparing device (DC) electrically connected to the output of said first frequency converter, characterized in that the frequency to which said bursts are being converted is the same frequency for both of the bursts, and is equal to half the difference between those frequencies at which the signal bursts are being received.

2. Arrangement according to claim 1, characterized in that located downstream of said first frequency converter (CO1) and upstream of said comparing device (DC) is a second frequency converter (CO2) designed to receive at the input said two new bursts and to convert them into a lower frequency burst.

3. Arrangement according to claim 1, characterized in that said two bursts are applied respectively to the inputs (J1, J2) of a first and a second attenuator (ATT 1, ATT 2) which, through a pick-up node (NP), feed them to said first converter (CO1) so that the amplitudes of said two bursts at the input of said first converter are comparable.

4. Arrangement according to claim 1, characterized in that said first converter (CO1) realizes the product of its input with a periodic signal having a frequency equal to the average value of said two different frequencies and in that a filter (FT) is located downstream of said first converter which is designed to eliminate spurious spectra deriving from said product.

5. Arrangement according to claim 4, characterized in that said periodic signal is a sine wave

6. Arrangement according to claim 1, characterized in that said comparing device is an oscilloscope.

7. Arrangement according to claim 2, characterized in that said second frequency converter (CO2) is an envelope detector.

8. Arrangement according to claim 2, characterized in that said second frequency converter is a spectrum analyzer used in a SPAN ZERO mode.

9. Arrangement according to claim 1, characterized in that said comparing consists in the measurement of time elapsed between said two bursts and in that the comparing device is a time meter.

## Patentansprüche

1. Vorrichtung zum Vergleichen von zwei zeitlich getrennten Signalimpulsen, welche auf zwei unterschiedlichen Frequenzen empfangen werden, im besonderen eines Abfrageimpulses und eines Antwortimpulses eines Abstandsmeßsystems, mit einem ersten Frequenzwandler (CO1), der die Signalimpulse an seinem Eingang empfängt und jeden auf eine Frequenz umsetzt, die sich von dessen ursprünglicher Frequenz unterscheidet, und mit einem Vergleichselement (DC), das mit dem Ausgang des ersten Frequenzwandlers elektrisch verbunden ist, dadurch gekennzeichnet, daß die Frequenz, auf die die Signalimpulse umgesetzt werden, für beide Signalimpulse dieselbe und gleich der halben Differenz jener Frequenzen ist, mit denen die Signalimpulse empfangen werden.

2. Vorrichtung gemäß Anspruch 1, dadurch gekennzeichnet, daß sich hinter dem ersten Frequenzwandler (CO1) und vor dem Vergleichselement (DC) ein zweiter Frequenzwandler (CO2) befindet, der so ausgelegt ist, daß er an seinem Eingang die zwei neuen Signalimpulse empfängt und diese in Signalimpulse niedererer Frequenz umsetzt.

3. Vorrichtung gemäß Anspruch 1, dadurch gekennzeichnet, daß zwei Signalimpulse an die Eingänge (J1, J2) eines ersten beziehungsweise eines zweiten Dämpfungsgliedes (ATT 1, ATT 2) angelegt werden, welche diese über einen Eingabeknoten (NP) an einen ersten Frequenzwandler (CO1) anlegen, so daß die Amplituden der beiden Signalimpulse am Eingang des ersten Wandlers vergleichbar sind.

4. Vorrichtung gemäß Anspruch 1, dadurch gekennzeichnet, daß der erste Wandler (CO1) das Produkt seines Eingangssignals mit einem periodischen Signal bildet, welches eine Frequenz aufweist, die gleich dem Mittelwert der zwei unterschiedlichen Frequenzen ist, und dadurch, daß sich hinter dem ersten Wandler ein Filter befindet, welches so ausgelegt ist, daß Störanteile aus dem Spektrum des Produkts eliminiert werden.

5. Vorrichtung gemäß Anspruch 4, dadurch gekennzeichnet, daß das periodische Signal eine Sinusfunktion ist.

6. Vorrichtung gemäß Anspruch 1, dadurch gekennzeichnet, daß das Vergleichselement ein Oszilloskop ist.

7. Vorrichtung gemäß Anspruch 2, dadurch gekennzeichnet, daß der zweite Frequenzwandler (CO2) ein Hüllkurvendetektors ist.

8. Vorrichtung gemäß Anspruch 2, dadurch gekennzeichnet, daß der zweite Frequenzwandler ein Spektrumanalysator ist, der mit dem Wobbelhub Null betrieben wird.

9. Vorrichtung gemäß Anspruch 1, dadurch gekennzeichnet, daß der Vergleich darin besteht, daß die Zeitspanne gemessen wird, die zwischen den zwei Signalimpulsen liegt, und dadurch, daß das Vergleichselement ein Zeitmesser ist.

## Revendications

1. Dispositif pour comparer deux séquences d'impulsions séparées temporellement qui sont reçues à deux fréquences différentes, en particulier une impulsion d'interrogation et une impulsion de réponse dans un système DME (télémètre), avec un premier changeur de fréquence (CO1) recevant lesdites séquences à son entrée et convertissant chacune d'elles en ne fréquence différente de sa fréquence initiale, et avec un dispositif de comparaison (DC) relié électriquement à la sortie dudit premier changeur de fréquence, caractérisé en ce que la fréquence à laquelle lesdites séquences sont converties est la même fréquence pour les deux séquences, et est égale à la moitié de la différence entre les fréquences auxquelles les séquences d'impulsions sont reçues.

2. Dispositif selon la revendication 1, caractérisé en ce que, disposé en aval audit premier changeur de fréquence (CO1) et en amont dudit dispositif de comparaison (DC) se trouve un second changeur de fréquence (CO2) conçu pour recevoir à l'entrée lesdites deux séquences nouvelles et pour les convertir en une séquence de fréquence plus basse.

3. Dispositif selon la revendication 1, caractérisé en ce que lesdites deux séquences sont appliquées respectivement aux entrées (J1, J2) d'un premier et d'un second atténuateur (ATT1, ATT2) qui, par l'intermédiaire d'un noeud de couplage (NP), les introduisent dans ledit premier changeur de fréquence (CO1) de sorte que les amplitudes desdites deux séquences à l'entrée dudit premier changeur de fréquence sont comparables.

4. Dispositif selon la revcndication 1, caractérisé en ce que ledit premier changeur de fréquence (CO1) effectue le produit de son entrée avec un signal périodique ayant une fréquence égale à la valeur moyenne desdites deux fréquences différentes et en ce qu'un filtre (FT) est placé en aval dudit premier changeur de fréquence qui est conçu pour éliminer les spectres parasites dûs audit produit.

5. Dispositif selon la revendication 4, caractérisé en ce que ledit signal périodique est une onde sinusoïdale.

6. Dispositif selon la revendication 1, caractérisé en ce que ledit dispositif de comparaison est un oscilloscope.

7. Dispositif selon la revendication 2, caractérisé en ce que ledit second changeur de fréquence (CO2) est un détecteur d'enveloppe.

8. Dispositif selon la revendication 2, caractérisé en ce que ledit second changeur de fréquence est un analyseur de spectre utilisé dans le monde BALAYASE ZERO.

9. Dispositif selon la revendication 1, caractérisé en ce que ladite comparaison consiste à mesurer le temps écoulé entre lesdites deux séquences et en ce que le dispositif de comparaison est un chronomètre.
